# EUROPÄISCHE PATENTSCHRIFT

(11) **EP 1 862 225 B1**
(45) Veröffentlichungstag und Bekanntmachung des Hinweises auf die Patenterteilung: **10.07.2013**
(21) Anmeldenummer: 07010551.5
(22) Anmeldetag: 26.05.2007
(51) Int. Cl.: B05D 5/08, B29C 47/02, B29C 47/20, B43K 19/14, B43K 23/008, B43K 19/16

(54) **Stift mit einer spitzbaren Umhüllung und einer auf der Stiftoberfläche vorhandenen Griffzone**
Pencil with a sharpenable wrapping and a gripping area on the surface of the pencil
Crayon doté d'une enveloppe pouvant être taillée et d'une zone de préhension se trouvant à la surface du crayon

(30) Priorität: 01.06.2006 EP 06011427
(43) Veröffentlichungstag der Anmeldung: 05.12.2007
(73) Patentinhaber: Faber-Castell AG, 90546 Stein (DE)
(72) Erfinder: Beck, Udo, 90461 Nürnberg (DE); Lugert, Gerhard, 90431 Nürnberg (DE); Oetter, Walter, 90546 Stein (DE)
(74) Vertreter: Meissner, Bolte & Partner

(56) Entgegenhaltungen:
- DE-A1- 2 527 416
- DE-A1- 10 003 792
- DE-C- 915 546
- GB-A- 1 382 362
- US-A- 2 988 784
- US-A1- 2002 098 029
- US-A1- 2004 071 491

## Beschreibung

Die Erfindung betrifft einen Stift mit einer spitzbaren Umhüllung und einer auf der Stiftoberfläche vorhandenen Griffzone. Die Umhüllung besteht beispielsweise aus Holz, einem Kunststoff oder einem Holzersatzstoff. Holzersatzstoffe sind Verbundwerkstoffe, die im Wesentlichen aus einer Polymermatrix mit darin eingelagerten Partikeln oder Fasern, etwa aus Holz, Papier oder Cellulose, bestehen. Die Griffzone kann von einem zusammenhängenden Bereich oder aus Einzelstrukturen, beispielsweise von Noppen oder Streifen gebildet sein und besteht aus einem rutschfesten, griffigen Material. Stifte mit Griffzonen sind bekannt. Die US2002/098029A1 offenbart einen Stift mit Griffzone mit erhabenen Strukturen aus Kunststoff. Die DE2527416A1 offenbart einen Stift mit Griffzone aus Kunststoff hergestellt durch Strangpressen. Bei Stiften der genannten Art ist es oft problematisch, dass das aufgebrachte Material nur schlecht haftet. Problematisch ist weiterhin das Material so aufzubringen dass deutlich voneinander abgegrenzte Strukturen mit gleichbleibender Kontur entstehen. Das Material der Griffzone muss weiterhin eine solche Konsistenz und Haptik aufweisen, dass es rutschfest und griffig ist. Erst dann kann die Griffzone ihre Funktion, nämlich ein ermüdungsfreies Führen des Stiftes zu erlauben, erfüllen. Ein Problem ist schließlich noch, dass das die Griffzone bildende Material in flüssiger Form aufgebracht wird, woraus sich insbesondere verfahrenstechnische Probleme ergeben. So sind, um ein Verfließen der etwa mit Hilfe von Düsen aufgetropften Ausgangsmasse zu verhindern, sofortige Härtungsmaßnahmen erforderlich, beispielsweise eine Trocknung zur Entfernung von Lösungsmittel aus der Ausgangsmasse. Dies geht aber oft nicht so schnell vonstatten, dass ein Verfließen der Strukturen zuverlässig unterdrückt werden kann. Denkbar ist hier zwar der Einsatz von strahlungshärtbaren Ausgangsmassen. Dabei ist es aber schwierig diese so einzustellen, dass sie nicht zu sehr erhärten und dadurch ihre für eine Griffzone erforderliche haptischen und taktilen Eigenschaften verlieren. Außerdem behindert eine zu große Härte das Spitzen des Stiftes.

Davon ausgehend ist es die Aufgabe der Erfindung, einen Stift mit einer spitzbaren Umhüllung und einer auf der Stiftoberfläche vorhandenen rutschfesten Griffzone vorzuschlagen, wobei diese aus einem Material besteht, das sich auf einfache und insbesondere sich für eine Serienproduktion eignenden Weise in einer Vielzahl unterschiedlicher Design-Variationen auf die Stiftoberfläche aufbringen, und sich problemlos beim Spitzen des Stiftes spanend abtragen lässt. Eine weitere Aufgabe ist es, ein geeignetes Verfahren zur Herstellung eines solche Stiftes bereitzustellen.

Diese Aufgaben werden durch einen Stift nach Anspruch 1 bzw. durch ein Verfahren nach Anspruch 7 gelöst. Ein erfindungsgemäßer Stift weist eine Griffzone auf, die von einem verfestigten Plastisol gebildet ist. Ein Plastisol ist eine Mischung aus einem pulverförmigen thermoplastischen Polymer und wenigstens einem Weichmacher, wobei gegebenenfalls Füllstoffe, Treibmittel und übliche Additive enthalten sind. Das Plastisol lässt sich durch entsprechende Wahl des Weichmachers und des Polymers so einstellen, dass für die jeweilige Verarbeitungsmethode bzw. das zum Aufbringen verwendete Verfahren eine optimale Konsistenz vorliegt. So löst sich bei Raumtemperatur ein Polymer grundsätzlich relativ langsam im Weichmacher auf, was bedeutet, dass nur oberflächennahe Bereiche der Polymerpartikel angelöst sind und eine relativ niedrig viskose Ausgangsmasse vorliegt. Diese kann beispielsweise im Siebdruckverfahren oder mit Hilfe von Tropfdüsen auf die Stiftoberfläche aufgebracht werden. Die angelösten Polymerpartikel weisen eine hohe Klebrigkeit auf, so dass sie sowohl gut an nahezu beliebigen Stiftoberflächen, beispielsweise Holz-, Kunststoff- oder lackierten Oberflächen als auch aneinander sehr gut haften. Dadurch lassen sich selbst kleinste Strukturen, etwa Noppen mit einem Durchmesser von weniger als 1 mm, mit gleicher Form und Größe erzeugen. Die Konsistenz der Ausgangsmasse lässt sich bei Plastisolen durch unterschiedliche Anteile an Polymerpartikeln und Weichmacher den jeweiligen Erfordernissen gut anpassen. Eine derartige Anpassung ist auch über die Verarbeitungstemperatur möglich. Bei höheren Temperaturen werden die Polymerpartikel zusehends angelöst, wobei die Ausgangsmasse in einen gelartigen Zustand mit erhöhter Viskosität, übergeht und dann in Form von spritz- oder extrudierbaren Pasten verarbeitbar ist. So können Griffzonen besonders einfach im Coextrusionsverfahren aufgebracht werden. Daneben lässt sich eine Griffzone auch dadurch erzeugen, dass das Plastisol mit Hilfe beheizter Düsen aufgespritzt oder aufgetropft oder im Spritzgussverfahren aufgebracht wird.

In den auf die eine oder andere Weise aufgebrachten Strukturen lassen sich, bevor sie ihre endgültige Konsistenz und Härte erreicht haben, in besonders vorteilhafter Weise durch Eindrücken von Werkzeugen, etwa von Formstempeln, vertiefte Bereiche bilden. Beispielsweise kann so in einer noch nicht erhärteten Plastisolbeschichtung ein vertieftes Muster erzeugt oder ein sich in Stiftlängsrichtung erstreckender Plastisolstrang zu kleineren Strukturen vereinzelt werden. Dies lässt sich auch erreichen, wenn die Extrusion oder Coextrusion eines Plastisolstrangs kurzzeitig unterbrochen wird. In allen genannten Fällen ist für eine Verfestigung der auf die Stiftoberfläche aufgebrachten Plastisole nur eine geringe Trocknungszeit erforderlich, wobei diese durch Anwendung von Wärme, insbesondere einer Infrarotstrahlung verkürzt werden kann. Eingedrückte oder eingravierte Muster und Strukturen bleiben nach dem Trocknen dauerhaft erhalten.

Als Plastisole kommen vor allem solche in Frage, die Partikel aus Polystyrol, Styrol-Butadien-Styrol (SBS), Polyamid, Polyolefin, Polymethylmethacrylat (PMMA), Polyvinylalkohol, Polyvinylacetat und/oder Styrol-Ethylen/Butylen-Styrol (SEBS) enthalten. Bei einer Applikation im Siebdruck oder Extrusionsverfahren sind Partikel aus PVC und Polyamid besonders geeignet. Neben aus Partikeln aus nur einem Kunststoff können auch Mischungen von Partikeln aus unterschiedlichen Kunststoffen verwendet werden. Als Weichmacher ist wenigstens ein Weichmacher aus der Gruppe Phthalsäureester, Alkylsulfonsäureester, Zitronensäureester, wie z.B. Tri-(2-ethylhexyl)-acetylcitrat und Acetyl-tributylcitrat, 2,2,4-Trimethyl-1,3-pentandioldibenzoat, 1,2 Cyclohexandicarbonsäure, mineralische oder synthetische Fette oder Öle. Im Falle natürlicher Öle können Raps-, Soja- und/oder Leinöl eingesetzt werden. Insbesondere für ein Aufbringen der eine Griffzone bildenden Strukturen auf eine Stiftoberfläche durch Siebdruck, Extrusion oder Coextrusion hat sich ein Plastisol als besonders geeignet herausgestellt, das als Weichmacher einen Zitronensäureester und als Partikel solche aus PVC und/oder solche aus Polyamid enthält. Zur Steuerung der Konsistenz der erhabenen Strukturen ist die Zugabe von Füllstoffen, insbesondere von Calciumcarbonat, Kaolin, Talkum und Bimsmehl. Ebenfalls optional sind Farbstoffe oder Additive enthalten.

Bei der Vielzahl insgesamt möglicher Rezepturen hat sich ein Arbeiten innerhalb folgender Basisrezeptur als vorteilhaft erwiesen:
20 - 60 Gew% Kunststoffpartikel
10 - 50 Gew% Weichmacher
0 - 50 Gew% Füllstoffe
0 - 10 Gew% Farbmittel
0 - 25 Gew% Additive

Als Additive kommen üblicherweise eingesetzte Zusatzstoffe wie etwa Gleitmittel in Frage.

Im Falle mit Hilfe eines Siebdruckverfahrens aufzubringenden bzw. aufgebrachten Plastisolen ist die Kombination aus PVC-Partikeln und Zitronensäureestern, beispielsweise Citrophol B2, besonders geeignet. Bei einer Applikation im Siebdruckverfahren ist ein Plastisol mit Polyamid-Partikeln und einem Alkylsulfonsäureester des Phenols mit 12 bis 20 C-Atomen am besten, wobei sich die Plastisole in beiden Fällen besonders problemlos applizieren lassen, eine für eine Griffzone besonders geeignete Konsistenz und Festigkeit aufweisen, wobei gegebenenfalls eine Optimierung durch Zusatz von Füllstoffen erfolgen kann.

### Ausführungsbeispiel 1:

Ein Stift mit einer Minenumhüllung hexagonalen Querschnitts aus Kunststoff oder Holz ist mit erhabenen Strukturen aus einem Plastisol folgender Zusammensetzung versehen:

| | |
|---|---|
| Solvin 372 NA *) (Kunststoff = PVC) | 30,0 Gew% |
| Citrophol B2 **) (Weichmacher, Zitronensäureester) | 30,0 Gew% |
| Marmormehl (Füllstoff) | 35,0 Gew% |
| Calciumstearat (Gleitmittel) | 4,1 Gew% |
| Glasmehl (Füllstoff) | 0,9 Gew% |

| | |
|---|---|
| *) Von der Solvin GmbH & Co KG, Lundwigstr. 12, 47495 Rheinberg, erhältlich. **) Von der JUNGBUNZLAUER LADENBURG GMBH, Dr. Albert-Reimann-Strasse 18, DE-68526 Ladenburg, erhältlich. | |

Zur Erzeugung der Strukturen wird durch eine Coextrusion jede zweite Seite des hexagonalen Stifts mit dem Plastisol beschichtet. Unmittelbar nach der Applikation wird alle 10 mm in die Plastisolschichten ein Stempel mit einem Quadrat als Muster in das noch weiche Plastisol eingedrückt, wodurch Stifte mit weichen, vertiefte Muster aufweisenden Seitenflächen entstehen.

Die Ausgangsstoffe gem. obengenannter Zusammensetzung werden homogen in einem Disolver gemischt. Die Coextrusion erfolgt bei einer Temperatur des Plastisols von 120 - 130°C.

### Ausführungsbeispiel 2:

Das hier verwendete Plastisol hat folgenden Zusammensetzung:

| | |
|---|---|
| Feinpulverisiertes Polyamid | 30,0 Gew% |
| Alkylsulfonsäureester (C 12 - C 20) des Phenols | 40,0 Gew% |
| Calciumstearat | 2,0 Gew% |
| Farbmittel (Pigment) | 1,0 Gew% |
| Calciumcarbonat (Füllstoff) | 27,0 Gew% |

Wie in Beispiel 1 werden die Ausgangsstoffe vermischt, wobei sich eine pastöse Masse bildet. Diese wird im Siebdruckverfahren mit Hilfe grobmaschiger Siebe auf runde Bleistifte aufgebracht, welche nach Aushärtung des Plastisols eine gummiartige Griffzone ergeben.

## Patentansprüche

1. Stift mit einer spitzbaren Umhüllung und einer auf der Stift-oberfläche vorhandenen Griffzone, **dadurch gekennzeichnet, dass** die Griffzone von einem verfestigten Plastisol gebildet ist.

2. Stift nach Anspruch 1,
**dadurch gekennzeichnet,**
**dass** das Plastisol Polymerpartikel aus PVC, Polystyrol, StyrolButadien-Styrol, Polyamid, Polyolefin, Polymethylmethacrylat, Polyvinylalkohol, Polyvinylacetat, oder Styrol-Ethylen/Butylen-Styrol (SEBS) oder eine Mischung solcher Polymerpartikel enthält.

3. Stift nach Anspruch 1 oder 2,
**gekennzeichnet durch**
ein Plastisol mit wenigstens einem Weichmacher aus der Gruppe Phthalsäureester, Alkylsulfonsäureester, 2,2,4-Trimethyl-1,3-pentandioldibenzoat, 1,2 Cyclohexandicarbonsäure, Zitronensäureester, mineralische oder synthetische Fette oder Öle.

4. Stift nach Anspruch 3,
**dadurch gekennzeichnet,**
**dass** das Plastisol als Weichmacher Tri-(2-ethylhexyl)-acetylcitrat, Acetyl-tributylcitrat enthält.

5. Stift nach Anspruch 3 oder 4,
**gekennzeichnet durch**
eine Griffzone, die als Weichmacher wenigstens einen Zitronensäureester und Partikel aus PVC und/oder Polyamid enthält.

6. Stift nach einem der vorhergehenden Ansprüche, mit einer aus einem Plastisol folgender Zusammensetzung gebildeten Griffzone:
20 - 60 Gew% Kunststoffpartikel
10 - 50 Gew% Weichmacher
0 - 50 Gew% Füllstoffe
0 - 10 Gew% Farbmittel
0 - 25 Gew% Additive.

7. Verfahren zum Herstellen eines Stiftes nach einem der vorhergehenden Ansprüche, **dadurch gekennzeichnet, dass** ein Plastisol in fließfähigem Zustand auf die Stiftoberfläche aufgebracht und anschließend verfestigt wird.

8. Verfahren nach Anspruch 7,
**dadurch gekennzeichnet,**
**dass** das Plastisols mit Hilfe eines Extrusions- oder Coextrusionsverfahrens auf die Stiftoberfläche aufgebracht wird.

9. Verfahren nach Anspruch 7 oder 8,
**dadurch gekennzeichnet,**
**dass** die Verfestigung des Plastisols durch eine Wärmebehandlung beschleunigt wird.

10. Verfahren nach Anspruch 9,
**gekennzeichnet durch**
eine Infrarotbestrahlung.

11. Verfahren nach einem der Ansprüche 7 bis 10,
**dadurch gekennzeichnet,**
**dass** in einer auf die Stiftoberfläche applizierten Plastisolschicht vertiefte Bereiche erzeugt werden, indem mit Hilfe eines Werkzeugs die Schicht eingedrückt wird.

12. Verfahren nach einem der Ansprüche 7 bis 10,
**dadurch gekennzeichnet,**
**dass** die Extrusion oder Coextrusion eines die Stiftoberfläche in Umfangsrichtung ganz oder teilweise überdeckenden Kunststoffstrangs unterbrochen wird, um in Stiftlängsrichtung voneinander getrennte erhabene Strukturen zu erzeugen.

## Claims

1. Pencil with a sharpenable covering and a grip zone provided on the outer surface of the pencil,
**characterised in that**,
the grip zone is formed from solidified plastisol.

2. Pencil according to claim 1,
**characterised in that**,
the plastisol contains polymer particles made from PVC, polystyrene, styrene butadiene styrene, polyamine, polyolefin, poly(methyl methacrylate), polyvinyl alcohol, polyvinyl acetate or styrene ethylene/butylene styrene (SEBS) or a mixture of such polymer particles.

3. Pencil according to claim 1 or 2,
**characterised by**,
a plastisol with at least one softening agent from the following groups: phthalic acid esters, alkyl sulphonic acid esters, 2,2,4 trimethyl-1,3-pentanediol dibenzoate, 1,2 cyclohexane dicarbonic acid, citric acid esters, mineral or synthetic fats or oils.

4. Pencil according to claim 3,
**characterised in that**,
the plastisol contains tri-(2-ethylhexyl)-acetyl citrate, acetyl-tributyl citrate as a softening agent.

5. Pencil according to claim 3 or 4,
**characterised by**,
a grip zone that contains at least one citric acid esteras a softening agent and particles of PVC and/or polyamine.

6. Pencil according to one of the preceding claims, having a grip zone formed from a plastisol with the following composition:
20-60% b.w. plastic particles
10-50% b.w. softening agents
0-50% b.w. fillers
0-10% b.w. colourants
0-25% b.w. additives

7. Method for producing a pencil according to one of the preceding claims,
**characterised in that**,
a plastisol is applied to the outer surface of the pencil in flowable form and then solidified.

8. Method according to claim 7,
**characterised in that**,
the plastisol is applied to the outer surface of the pencil by means of an extrusion or co-extrusion process.

9. Method according to claim 7 or 8,
**characterised in that**,
the solidification of the plastisol is accelerated by heat treatment.

10. Method according to claim 9,
**characterised by**,
infrared radiation.

11. Method according to one of claims 7 to 10,
**characterised in that**,
while the coating is being pressed with a tool, recessed regions are produced in a plastisol coating applied to the outer surface of the pencil.

12. Method according to one of claims 7 to 10,
**characterised in that**,
the extrusion or co-extrusion of a plastic strand that completely or partially covers the outer surface of the pencil in the peripheral direction is discontinued in order to produce raised structures that are separated from one another in the longitudinal direction of the pencil.

## Revendications

1. Crayon comprenant une enveloppe taillable et une zone de préhension présente sur la surface du crayon, **caractérisé en ce que** la zone de préhension est formée par un plastisol solidifié.

2. Crayon selon la revendication 1,
**caractérisé en ce que**
le plastisol contient des particules polymères de PCV, de polystyrène, de styrène-butadiène-styrène, de polyamide, de polyoléfine, de polyméthacrylate de méthyle, d'alcool polyvinylique, d'acétate de polyvinyle, ou de styrène-éthylène-butylène-styrène (SEBS) ou un mélange de telles particules polymères.

3. Crayon selon la revendication 1 ou 2,
**caractérisé par**
un plastisol comprenant au moins un plastifiant du groupe ester d'acide phtalique, ester d'acide alkylsulfonique, 2,2,4-triméthyle-1,3-pentanédiol dibenzoate, 1,2 acide cyclohexanedicarboxylique, ester d'acide citrique, huiles ou graisses minérales ou synthétiques.

4. Crayon selon la revendication 3,
**caractérisé en ce que**
le plastisol contient en tant que plastifiant de l'acétyl-citrate de tri(2-éthylhexyle), de l'acétyl-citrate de tributyle.

5. Crayon selon la revendication 3 ou 4,
**caractérisé par**
une zone de préhension qui contient un ester d'acide citrique et des particules de PVC et/ou de polyamide en tant que plastifiant.

6. Style selon l'une des revendications précédentes, comprenant une zone de préhension formée d'un plastisol de composition suivante :
20-60 % en poids de particules plastique
10-50 % en poids de plastifiant
0-50 % en poids de charges
0-10 % en poids de colorants
0-25% en poids d'additifs.

7. Procédé de fabrication d'un crayon selon l'une des revendications précédentes, **caractérisé en ce qu'**un plastisol est appliqué à l'état coulant sur la surface du crayon et ensuite solidifié.

8. Procédé selon la revendication 7,
**caractérisé en ce que**
le plastisol est appliqué à l'aide d'un procédé d'extrusion ou de coextrusion sur la surface du crayon.

9. Procédé selon la revendication 7 ou 8,
**caractérisé en ce que**
la solidification du plastisol est accélérée par un traitement thermique.

10. Procédé selon la revendication 9,
**caractérisé par**
un rayonnement infrarouge.

11. Procédé selon l'une des revendications 7 à 10,
**caractérisé en ce que**
des zones évidées sont produites dans une couche de plastisol appliquée sur la surface du crayon, en emboutissant la couche à l'aide d'un outil.

12. Procédé selon l'une des revendications 7 à 10,
**caractérisé en ce que**
l'extrusion ou la coextrusion d'un boudin de plastique recouvrant tout ou partie de la surface du crayon dans le sens de son pourtour est interrompue pour produire des structures en relief séparées les unes des autres dans le sens longitudinal du crayon.
